# EUROPEAN PATENT SPECIFICATION

(11) **EP 3 778 158 B1**
(45) Date of publication and mention of the grant of the patent: **05.10.2022**
(21) Application number: 19191373.0
(22) Date of filing: 13.08.2019
(51) Int. Cl.: B26D 5/32, B29C 48/12, B65H 35/04, G01B 5/06

(54) **A METHOD AND AN APPARATUS FOR DETECTING JOINTS ON A MATERIAL STRAND**
VERFAHREN UND VORRICHTUNG ZUM ERKENNEN VON FÜGESTELLEN AUF EINEM MATERIALSTRANG
PROCÉDÉ ET APPAREIL POUR DÉTECTER DES JOINTS SUR UN BOUDIN DE MATIÈRE

(43) Date of publication of application: 17.02.2021
(73) Proprietor: Cooper Standard GmbH, 88131 Lindau (DE)
(72) Inventor: SCHOLL, Erik, 66709 Weiskirchen (DE); KLÜBERSPIES, Thomas, 88085 Langenargen (DE)
(74) Representative: Witte, Weller & Partner Patentanwälte mbB

(56) References cited:
- EP-A1- 3 431 250
- WO-A1-97/33028
- DE-A1-102010 027 818
- DE-A1-102016 123 487
- US-A1- 2014 068 957

## Description

The present invention relates to a method for detecting irregularities on a sealing profile strand made of an elastomeric material such as thermoplastic elastomere (TP) or ethylene propylene diene monomer rubber (EPDM), comprising the steps of providing a sealing profile strand which defines a longitudinal axis along which the sealing profile strand is to be conveyed, and the step of detecting an irregularity like a joint in the sealing profile strand.

Further, the present invention relates to a corresponding apparatus for detecting irregularities on a sealing profile strand. Finally, the present invention relates to a method for applying a sealing profile strand strip on a body portion.

The sealing profile strand is a sealing profile strand for sealing body openings of vehicle bodies.

In the technical field of manufacturing vehicle bodies, it is known to apply material strands to body openings, for example door openings or window openings. The material strand is typically made from a radially elastically deformable material, so as to provide the necessary sealing properties. Typical material examples are TPE (thermoplastic elastomer) and EPDM (ethylene propylene diene monomer rubber).

Other types of material strands can be used for trimming or fastening purposes in relation to body openings, particularly doors, windows, lids etc.

The material strands are typically produced by an extrusion process. In many cases, material strand strips with a predefined strip length are cut off from the extruded material at a manufacturing site, and are then collectively shipped to an application site, typically an OEM.

Another concept for transporting the material strands to an application site, is the so-called "endless" concept. Here, at the manufacturing site, an extruded material strand is continuously wound on a reel, thus forming a material strand assembly. The reel with the material strand wound thereon is then transported to the application site, where the material strand is un-wound from the reel and material strand strips are cut-off at the predefined strip length.

The application of the material strand strips to the vehicle body can be made manually, or can be conducted by robots. The step of cutting-off material strand strips from an un-wound material strand can also be conducted automatically.

From document EP 3 431 250 A1, there is known a method for manufacturing a material strand assembly for a vehicle, particularly for sealing a body opening of a vehicle part, including the steps of: extruding strand material in an extruder so that a material strand is produced; monitoring the quality of the extruded material strand so as to detect faults of the material strand; in case of a detection of a fault, cutting out the fault from the material strand, using a cutting arrangement, and re-joining cutting end faces, thus producing a joint, so that a faultless material strand is produced, wherein the cutting-out step or the step of detection and cutting-out is conducted such that any two adjacent joints are at a minimum joint distance from each other; storing the faultless material strand in a storage unit so as to produce the material strand assembly; wherein the extruded material strand is passed through a first strand accumulator between the extruder and the cutting arrangement and/or wherein the faultless material strand is passed through a second strand accumulator between the cutting arrangement and the storage unit.

This method allows to produce a faultless material strand which is stored in a storage unit, for example wound on a reel. Any faults that are produced during the extrusion process, are cut out before the material strand, which is faultless as a consequence, is stored in the storage unit. The joints that are produced when re-joining the cutting end faces, have a uniform axial length.

In some embodiments, the joints may be produced with a quality so that such joint may be included in an applied material strand strip. In other cases such joints will have to be cut out before applying material strand strips at the application site, wherein the detection and the cutting out of such joints can be simplified against the prior art due to the uniformity of the axial length of the joints.

The re-joining step of cutting end faces is preferably conducted at standstill, so that the first strand accumulator and/or the second strand accumulator are used in order to compensate for speed/velocity differences. Namely, the extrusion process cannot be stopped, so that the extruded material strand, which is fed into an input side of the first strand accumulator, is accumulated therein, while the output side of the accumulator may be at standstill (e.g. for conducting the joining process).

The faultless material strand that is stored in the storage unit may have an axial length of at least 500 m, preferably at least 800 m, in particular at least 1000 m. Typically, the maximum axial length of the faultless material strand is less than 2000 m, preferably less than 1800 m.

The faultless material strand that is stored in the storage unit of the material strand assembly may, in the best case, include no joint at all. This would mean that the entire axial length has been produced without any faults in the extrusion process. On the other hand, depending on the fault level or fault standard set by an OEM, the faultless material strand which is stored in the storage unit may include 1 to 20 joints. In a worst case scenario, the number of joints may reach 40.

The minimum joint distance between any two adjacent joints is preferably in a range from 3 m to 10 m, and is preferably in a range from 5 m to 9 m. Further, it is preferred if the minimum joint distance is larger than two times the predefined strip length of a material strand strip.

The material of the material strand is preferably a plastics or elastomer material, which is preferably radially elastically compressible, for example TPE, EPDM, etc. The material strand may be a single component material strand, made from a single material, or may be a multi-component material strand including at least two components of different materials. Typically, the material strand is a two component-strand, including for example a relatively hard component for attaching the strand strip to a vehicle opening, and a relatively soft portion for providing sealing functions, e.g. an EPDM hose attached to a attachment socket strand.

In the above method, it is preferred that, if a joint is produced, the position of the joint is neither recorded nor marked.

In other words, the manufacturing process does not include any additional step of marking a joint that is produced after cutting out a fault from the extruded material strand. Also, the position of such joint is not recorded.

At the application site, an inspection device is adapted to inspect the un-stored faultless material strand for joints. Such inspection device may be an image-based sensor, e.g. a camera-based sensor, that is able to detect joints, but may also be a sensor dedicated to the detection of joints. Namely, the joints may be produced by inserting a different type of material between the cutting end faces, in which case the inspection device is adapted to sense the different material. In addition, the joining step may include the use of a material that is detectable by such inspection device, e.g. a certain adhesive and/or the detection of a thread or a yarn that is used for stitching, particularly the material thereof, which may be or may include metal. In addition, any joint which uses a material different from the material of the extruded material strand, may include metallic particles or the like that can be easily detected by an inspection device at the application site. Preferably, however, the joint that is produced at the manufacturing site, is a standard joint, for example a joint produced by mirror-imaged cutting faces, optionally with a different material or an adhesive therebetween. In other cases, the standard joints can be produced from complementary, non-mirror-imaged, cutting end faces, either with a different material or an adhesive therebetween, or with a stitching or the like.

In the case of stepped complementary cutting end faces, an adhesive or the like may be arranged between cutting end face portions that are arranged parallel to the strand axis. In this case, certain gaps may be provided between those cutting end face portions that extend transversely to the strand axis.

DE 10 2010 027 818 A1 discloses a system which has a compounding device ,e.g. twin screw extruder, for producing a plastic strand, and a measurement device arranged downstream to the compounding device in a direction of transport of the plastic strand. A press member e.g. printing roller, is arranged opposite to a back pressure element e.g. back pressure roller, relative to the strand to test a pressing force on the strand. A control device determines printing properties of the strand of material index from a measurement signal.

US 2014/0068957 A1 discloses an apparatus for measuring the shape of a material includes: a width roller configured to roll a width of the material; a plurality of transfer rollers arranged in a rear side of the width roller to transfer the width rolled material; and a measurement unit disposed between the transfer rollers to contact the material moved over the transfer rollers to measure the shape of the material.

WO 97/33028 A1 discloses a sewn seam monitoring system for evaluating selected characteristics of a seam formed from a plurality of fabric plies comprising a vertically displaceable wheel (36) for compressing and monitoring the thickness of a seam being sewn as the seam passes there-beneath and a transducer (32) operatively connected to the wheel to measure vertical movement and generate a signal corresponding to the vertical displacement of the wheel. Computer means is electrically connected to the transducer for analyzing the seam being sewn to detect any defects therein sensed by the wheel when in compressing contact with the seam passing there-beneath.

It is the object of the invention to provide an improved method for detecting joints in a sealing profile strand, an improved apparatus for detecting joints in a sealing profile strand, as well as an improved method for applying a sealing profile strand strip on a body portion.

The above object is achieved by a method for detecting joints in a sealing profile strand according to claim 1, wherein the sealing profile strand is made of an elastomeric, i.e. radially elastically deformable material, such as TPE or EPDM, comprising the steps of:
- providing a sealing profile strand which defines a longitudinal axis along which the sealing profile strand is to be conveyed;
- bringing a detection element in contact with the sealing profile strand, wherein the detection element is movably mounted in a direction of deflection transverse to the longitudinal axis and/or wherein a force can act on the detection element in a force direction,
- setting up a relative movement between the detection element and the sealing profile strand along the longitudinal axis; and
- detecting a deflection of the detection element in the deflection direction and/or a force acting on the detection element in the force direction, so as to detect irregularities in the sealing profile strand.

Further, the above object is achieved by an apparatus for detecting irregularities on a sealing profile strand made of an elastomeric material according to claim 10, comprising a detection element, a travel sensor and/or a force sensor and a control device, the apparatus being adapted to:
- providing a material strand which defines a longitudinal axis along which the sealing profile strand is to be conveyed;
- bringing a detection element in contact with the sealing profile strand, wherein the detection element is movably mounted in a direction of deflection transverse to the longitudinal axis and/or wherein a force can act on the detection element in a force direction,
- setting up a relative movement between the detection element and the sealing profile strand along the longitudinal axis; and
- using the travel sensor for detecting a deflection of the detection element in the deflection direction and/or the force sensor for detecting force acting on the detection element in the force direction, so as to detect a joint in the sealing profile strand, when a sensor signal produced by the travel sensor and/or the force sensor exhibits a peak.

Finally, the above object is achieved by a method for applying a sealing profile strand strip on a body portion according to claim 9, comprising the steps of:
- providing a sealing profile strand assembly including a sealing profile strand which might have one or more irregularities, particularly joints,
- un-storing the sealing profile strand from the sealing profile strand assembly, wherein a detection element is brought into contact with the sealing profile strand, wherein the detection element is movably mounted in a deflection direction transverse to a longitudinal axis and/or wherein a force acting on the detection element in a force direction can be detected,
- detecting a deflection of the detection element in the deflection direction and/or a force acting upon the detection element in the force direction, so as to detect irregularities in the sealing profile strand, according to the detecting method of claim1 , and
- cut off a sealing profile strand strip which has a predefined length, from an end of the sealing profile strand, if no irregularity has been detected between the end of the sealing profile strand and a cutting location determined by the predetermined length.

In practice, it is sometimes not easy to reliably detect joints in a faultless material strand by means of a camera-based system.

The present invention aims to overcome this problem by providing a detection element which is in contact with the material strand, wherein a relative movement between the detection element and the material strand along the longitudinal axis is set up, and wherein a deflection of the detection element in a deflection direction transverse to the longitudinal axis, and/or a force acting on the detection element in a force direction is detected, so as to detect irregularities. The deflection direction and/or the force direction is preferably aligned transverse to the longitudinal axis (the relative movement direction), particularly orthogonal thereto.

It is preferred if the detection element is slightly pressed radially (for example parallel to the deflection direction) into the elastically deformable material strand. Typically, joints have a uniform axial length and are harder than the material strand itself. Therefore, the joint, when passing along the detection element during the relative movement, will lead to a radial deflection of the detection element and/or to a force on the detection element, whichis detected by a sensor, for example a travel sensor and/or a force sensor. The detection element is mounted moveably in the deflection direction, particularly if the detection element is used to detect a deflection in a deflection direction. On the other hand, if the detection element is used to detect a force acting on the detection element, the detection element is stationary ( immoveably mounted).

The sensor signal produced by such a travel sensor and/or a force sensor is typically a relatively constant signal which exhibits a peak only when a joint is detected.

The peak is detected by using a threshold value. Only in case that the detector signal exceeds the threshold value, a joint will be recognized. The threshold value is typically the basic value plus 10%. On the other hand, considering the speed of relative movement, the distance over which the peak appears should have a certain dimension which is in the range of the predetermined axial length that the joints typically have. The axial length of the joints is preferably in a range of 0.1 to 1.0 mm.

If the peak length in the longitudinal direction is considerably longer than such average axial joint length, the peak does not reflect a joint but any other unforeseeable fault. On the other hand, if the axial length of the detected irregularity is considerably shorter than the axial joint length, the detected peak will also be discarded as not reflecting a joint but another irregularity.

The method according to the invention can be used in combination with a camera based sensor for detecting joints, or can be used as an alternative thereto.

The steps of applying the material strand strip to the body portion can be essentially the same as disclosed in document EP 3 431 250 A1. The disclosure of this document is incorporated herein by reference.

The above object is therefore achieved in full.

Preferably, the detection element is mounted on a bearing block, wherein a deflection of the bearing block in the deflection direction and/or a force exerted on the bearing block by the material strand is detected in order to detect irregularities in the material strand.

The detection element can be a element having a low friction coefficient surface, like a gliding element. Therefore, the relative movement between the deflection element and the material strand does not produce excessive heat.

In a preferred embodiment, the detection element is a roller element which is mounted on a bearing block, wherein the roller element is rotatable about a roller axis which is aligned transversely to both the longitudinal axis and the deflection direction or force direction, respectively.

In this embodiment, the roller element rolls on the material strand during the relative movement, so that no heat is produced thereby, even if the roller element is slightly pressed into the material strand in the radial direction.

In another preferred embodiment, the deflection and/or the force is continuously detected and compared with a previously stored characteristic.

As explained above, the previously stored characteristic preferably includes a certain threshold as well as a certain axial length of a detected peak.

In a preferred embodiment, the axial length of the detected irregularity may be in a range from 2 mm to 10 mm in order to be identified as a joint.

In another preferred embodiment, the deflection and/or the force are stored in the form of a displacement profile and/or a force profile.

Such profiles may be used for monitoring and/or quality assessment purposes. The profiles may be profiles recorded over the relative movement travel and/or profiles recorded over the time (temporal profiles).

It will be understood that the features of the invention mentioned above and those yet to be explained below can be used not only in the respective combination indicated, but also in other combinations or in isolation, without leaving the scope of the present invention.

Exemplary embodiments of the invention are explained in more detail in the following description and are represented in the drawings, in which:
- Fig. 1: is a schematic view of a prior art manufacturing apparatus for manufacturing a material strand assembly;
- Figs. 2a to 2o: are sequences of operation in a prior art method for manufacturing a material strand assembly;
- Fig. 3: shows several schematic views of different types of joints in a faultless material strand;
- Fig. 4: is a schematic view of an apparatus for applying a material strand strip to a vehicle part;
- Fig. 5: is a schematic view of an apparatus for detecting irregularities on a material strand and a portion of a profile of deflection and/or force over a relative travel between the material strand and the detection apparatus; and
- Fig. 6: an alternative embodiment of an apparatus for detecting irregularities.

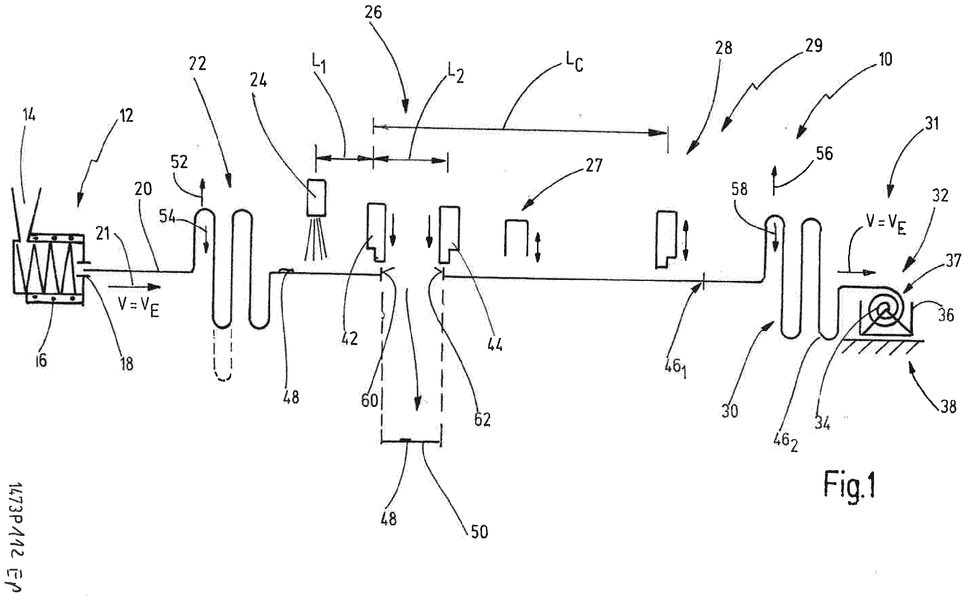

In Fig. 1, an embodiment of a manufacturing apparatus for manufacturing a material strand assembly is schematically shown and given the reference numeral 10.

The manufacturing apparatus 10 includes an extruder 12, which is adapted to receive strand material 14. The extruder 12 may include a heater 16 and comprises a die 18. In operation, the extruder 12 produces a material strand 20 that moves at an extrusion speed v_{E} out of the die, along a moving direction 21.

Downstream of the extruder 12, the manufacturing apparatus 10 includes a first strand accumulator 22, a monitoring device 24, a first cutting device 26, a joining device 27, a second cutting device 28, wherein the first cutting device 26 and the second cutting device 28 form a cutting arrangement 29, a second strand accumulator 30 and a storing device 31.

The first strand accumulator 22 and the second strand accumulator 30 allow for movement speeds of the material strand between the accumulators 22, 30 that differ from the movement speed upstream of the first strand accumulator 22 and/or downstream of the second strand accumulator 30. Typically, the storing device 31 may be adapted to store a material strand at the same speed as the extrusion speed (v_{E}).

The storing device 31 is adapted to store a material strand in a storage unit 32. The storage unit 32 may have a reel 34 which is supported rotatably in a reel carrier 36, e.g. a reel box.

The material strand that is stored in the storage unit 32 is a faultless material strand 37, wherein any faults of the extruded material strand 20 have been cut out.

As soon as a predefined length of faultless material strand 37 is stored in the storage unit 32, thus forming a material strand assembly 38, the material strand assembly 38 can be transported to another site where the material strand of the material strand assembly 38 is processed, e.g. an application site at an OEM.

The material strand 20 is typically used for sealing, trimming or fastening body openings in vehicle bodies, typically in the automobile industry.

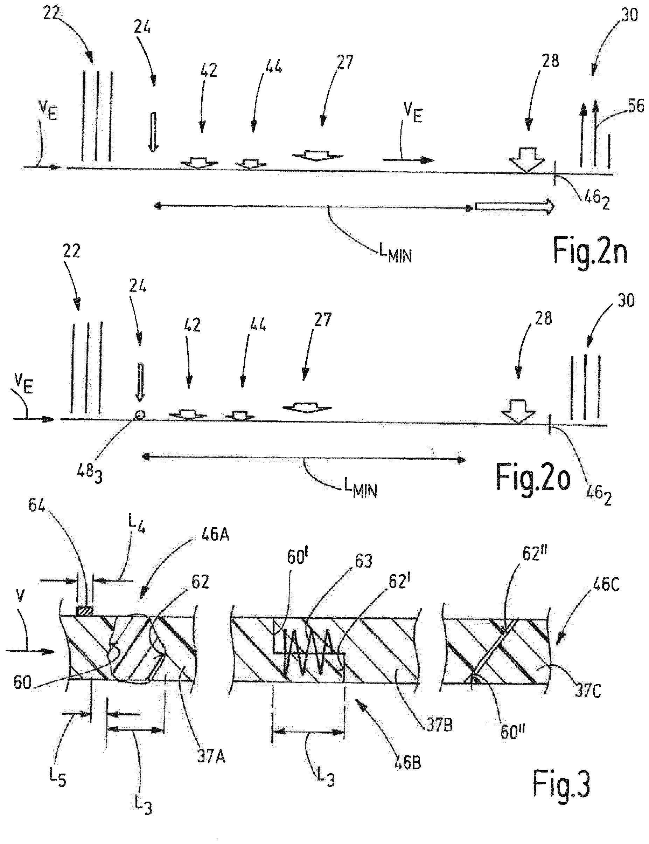

The first cutting device 26 may include a single cutter for preparing right-angled cutting end faces, as for example shown in Fig. 3, left side.

In the present case of Fig. 1, the first cutting device 26 includes a first upstream cutter 42 and a second downstream cutter 44. The first cutter 42 and the second cutter 44 are provided so as to prepare complementary cutting edges, as for example shown in Fig. 3, middle or right side.

The first cutter 42 and the second cutter 44 are adapted to cut out any extrusion fault 48 that has been detected by the monitoring device 24, thus producing a scrap piece 50. The joining device 27 is adapted to re-join the remaining material strand at its opposite cutting end faces (not shown in Fig. 1). The joining process conducted by the joining device 27 leads to a joint 46, two of which are shown at 46₁ and 46₂ in Fig. 1. The faultless material strand 27 does not include any faults 48, but may include a number of joints 46.

A distance between the monitoring device 24 and the first cutting device 26 is shown at L₁. The distance L₁ is chosen such that, at a typical maximum speed of the material strand 20, there is sufficient time for the first cutting device 26 to be operated when a fault 48 is detected by the monitoring device 24.

The axial distance between the first cutter 42 and the second cutter 44 is shown at L₂.

The length L₂ may, for example, correspond to an average axial fault length. In the present embodiment, L₂ is chosen to be in a range from 50 cm to 150 cm, for example 1 m (100 cm).

An axial distance between the first cutter 42 and the second cutting device 28 (which may include a third cutter) is shown in Fig. 1 at L_{C}.

The length L_{C} (the cutting device distance) corresponds preferably to a minimum joint distance L_{MIN}, explained below.

The cutting device distance L_{C} is preferably shorter than L_{MIN}.

The ratio of L_{C} to L₂ is preferably in a range from 7:1 to 3:1, preferably in a range from 4.5:1 to 6:1.

If the movement speed of the material strand downstream of the first strand accumulator 22 is set to be smaller than the extrusion speed v_{E}, the first strand accumulator 22 can be loaded, as shown at 52. On the other hand, if the material strand speed downstream of the first strand accumulator 22 is set to be higher than the extrusion speed v_{E}, the first strand accumulator 22 can be unloaded as shown at 54.

Similarly, the second strand accumulator 22 can be loaded, as shown at 56, if the material strand speed upstream of the second strand accumulator 30 is higher than the material strand speed downstream of the second strand accumulator 30. On the other hand, if the speed relation is reversed, the second strand accumulator 30 can be unloaded, as shown at 58.

The cutters 42, 44 may include knifes or notching devices, and can be operated online, i.e. while the material strand moves along the first cutting device 26. On the other hand, it is also possible to stop the material strand when conducting the cutting-out step.

When the scrap piece 50 is cut out from the material strand, two opposing cutting end faces 60, 62 are produced, which can be re-joined in the joining device 27, thus producing a joint 46.

The joining device 27 is preferably a stationary device. Similarly, the cutters 42, 44 and the second cutting device 28 are stationary. In other embodiments, however, these elements can be axially movable devices, so that these devices can be moved synchronously with the material strand.

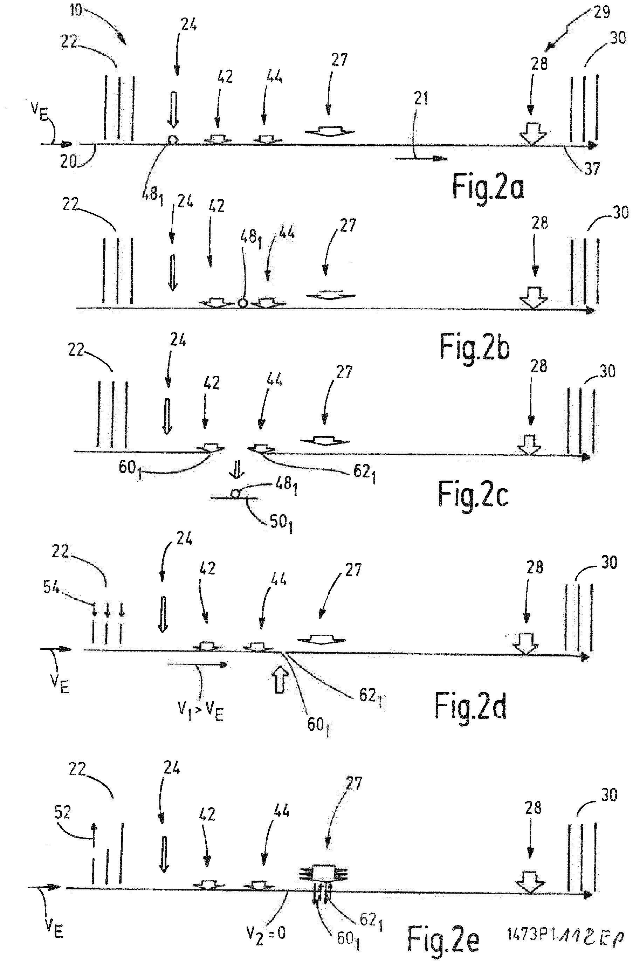

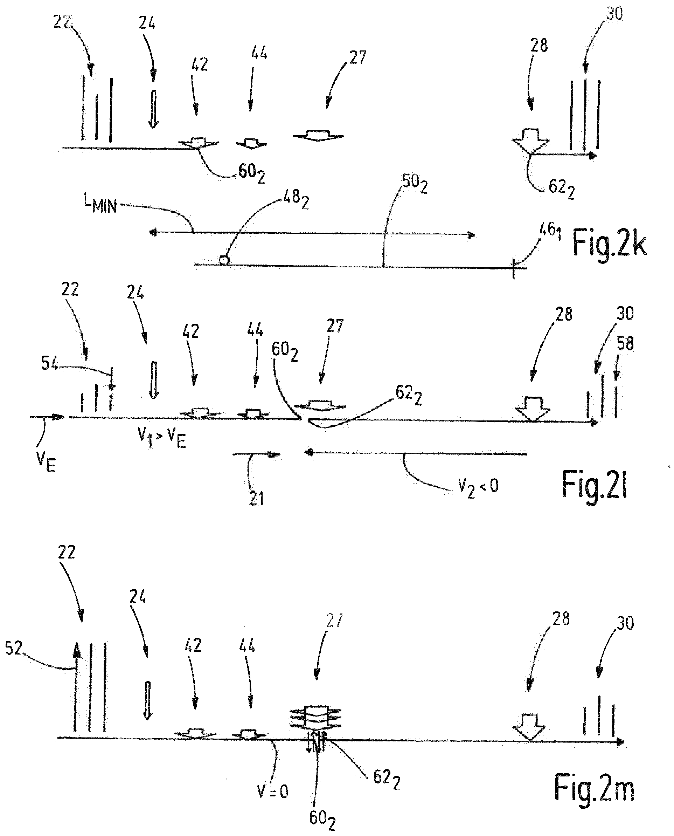

In Fig. 2a to 2o, a sequence of operation of a manufacturing apparatus 10 is shown, which corresponds with respect to construction and function to the manufacturing apparatus 10 of Fig. 1. Similar elements are given the same reference numerals. In the following, the operation is explained in detail.

In Fig. 2a, a situation is shown where the material strand 20 is moved in moving direction 21, wherein a fault 48₁ is detected by the monitoring device 24.

In Fig. 2b, the fault 48₁ has been moved into the area axially between the first cutter 42 and the second cutter 44.

In Fig. 2c, the first cutter 42 and the second cutter 44 are operated simultaneously, thus cutting out a scrap piece 50₁ on which the fault 48₁ is located, thus producing two opposing cutting end faces 60₁, 62₁ in the area of the cutters 42, 44.

In Fig. 2d, the first strand accumulator 22 is unloaded (schematically shown at 54), so that the material strand downstream of the first strand accumulator 22 moves with a speed v₁ which is larger than v_{E}, such that the two cutting end faces 60₁, 62₁ are approaching each other.

In Fig. 2e, the cutting end faces 60₁, 62₁ are close to each other and are located in the area of the joining device 27, which is stationary, so that the material strand is brought to a standstill, such that the material strand speed v₂ = 0. In this case, the first strand accumulator 52 is loaded, as shown at 52 in Fig. 2e. The joining device 27 is operated so as to stitch overlapping ends of the cutting end phases 60₁, 62₁. In the joining device 27, therefore, a first joint 46₁ is produced.

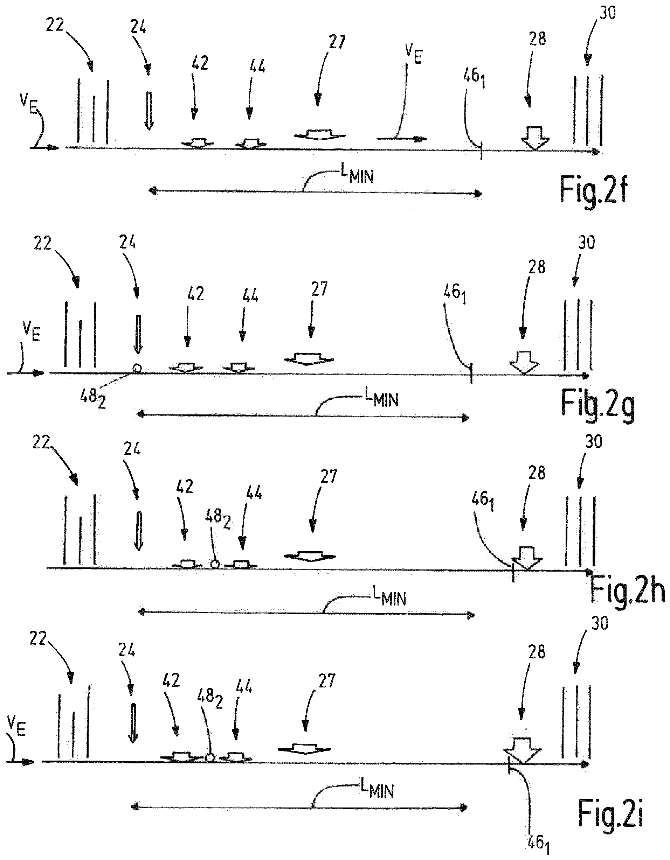

In Fig. 2f, it is shown that the material strand is moving again at the extrusion speed v_{E}, so that the accumulators 22, 30 are neither loaded nor unloaded. The first joint 46₁ has moved into the direction of the second cutting device 28.

In Fig. 2f, it is shown that the joint 46₁ has reached an axial distance from the monitoring device 24, which is L_{MIN}, which is a minimum joint distance. Namely, the faultless material strand 37 that is to be stored in the storage unit 32 may have joints, but any two adjacent joints must be at the minimum joint distance L_{MIN} from each other. The distance L_{MIN} is preferably in a range from 3 m to 10 m, particularly in a range from 4 m to 7 m, preferably in a range from 4.5 m to 6 m.

In Fig. 2f, it is shown that no further fault 48 has been detected within the minimum joint distance L_{MIN}, so that the process can be continued by moving the material strand and storing the faultless material strand 37 in the storage unit 32.

Fig. 2g shows a different situation. Here, a second fault 48₂ has been detected by the monitoring device 24 at a distance from the first joint 46₁, which is less than or equal to L_{MIN}. Here, a distance between the first joint and a second joint for the second fault 48₂ would be axially shorter than the minimum joint distance L_{MIN}.

Therefore, the process continues with the situation of Fig. 2h, where the second fault 48₂ is located between the first and the second cutter 42, 44. The first joint 46₁ is still located upstream of the second cutting device 28 in this case.

As shown in Fig. 2i, the first cutter 42 and the second cutting device 48 are operated simultaneously, so that a second scrap piece 50₂ is produced (as shown in Fig. 2k), which includes the first joint 46₁ and the second fault 48₂. Further, two opposing cutting end faces 60₂, 62₂ are produced at the locations of the first cutter 42 and the second cutting device 28, respectively.

In order to bring the opposing cutting end faces 60₂, 62₂ into the area of the joining device 27, the first strand accumulator 22 is unloaded, as shown at 54, and, further, the second strand accumulator 30 is unloaded as shown at 58. The unloading of the first strand accumulator 22 has the effect that the material strand speed V₁ downstream of the first strand accumulator 22 is higher than the extrusion speed V_{E}. The unloading 58 of the second strand accumulator 30 has the effect that the cutting end face 62₂ is moved in a direction opposite to the moving direction (extrusion direction), so that the material stand that is moved out of the second strand accumulator 30 is moved at a speed V₂ which is smaller than zero (negative speed).

Therefore, as shown in Fig. 2m, the cutting end faces 60₂, 62₂ meet at the joining device 27, so that, at a material strand speed of v = 0, a second joint 46₂ is produced. As shown in Fig. 2n, the second joint 46₂ has moved beyond the second cutting device 42, without that another fault having been detected in the monitoring device. Thus, the second joint 46₂ is at the minimum joint distance from any upstream joint, and the second joint 46₂ can be fed into the second strand accumulator 30 as shown at 56 in Fig. 2n. In Fig. 2n, the speed with which the faultless material strand 37 is stored in the storage unit 32 is preferably less than V_{E}. As shown in Fig. 2o, a third fault 48₃ is detected after the second joint 46₂ has passed the second joining device 28. The third fault 48₃ will be dealt with in a manner identical to what has been described with respect to Figs. 2a to 2f.

In Fig. 3, three different types of joints 46 are shown. On the left hand side in Fig. 3, a joint 46A of a faultless material strand 37A is shown, wherein a material dissimilar from the material of the material strand 37A is inserted between the cutting end faces 60, 62, wherein the joining material is for example a thermoplastic elastomer material or any other thermoplastic joining material which, by way of heating, produces a thermoplastic weld at the cutting end faces 60, 62.

In the middle portion of Fig. 3, a joint 46B is shown, wherein the cutting end faces 60', 62', produced by special cutters 42, 44, have complementary shapes. For example, the cutters 42, 44 can be formed by L-shaped notching elements. Therefore, these L-shaped cutting end faces are complementary to each other and overlap axially, such that a stitching 63 can be produced in the joining device 27, so as to join the material strand portions of the faultless material strand 37B together. As an alternative to the stitching 63, the cutting end faces portions that are aligned parallel to the longitudinal direction, could be connected by adhesive or the like, so that the portions of the cutting end faces 60', 62', that are arranged transverse and at the outer border of the material strand 37B, could be distant from each other and present gaps that can be easily detected.

In Fig. 3, the joint 46C includes cutting end faces 60", 62", that are complementary to each other by having complementary slopes, thus, again, producing a faultless material strand 37C.

As shown in the left hand part of Fig. 3, any joint 46A (or 46B, 46C or any other joint) can be marked by a marking 64, wherein an axial length L₄ of the marking 64 is shorter than an axial length L₃ of the joint. Further, the marking 64 may have an axial distance L₅ from the joint 46A, wherein 0 ≤ L₅ ≤ 20 cm, for example, either upstream or downstream of the joint.

On the other hand, the above joints 46A, 46B, 46C may not be marked at all.

As a third alternative, an axial position of each of the joints 46A, 46B, 46C may be recorded in a recording device, which is assigned to the material strand assembly 38. As explained later, at an assembly site, such recording device can be used in order to identify the positions of joints of the faultless material strand 37.

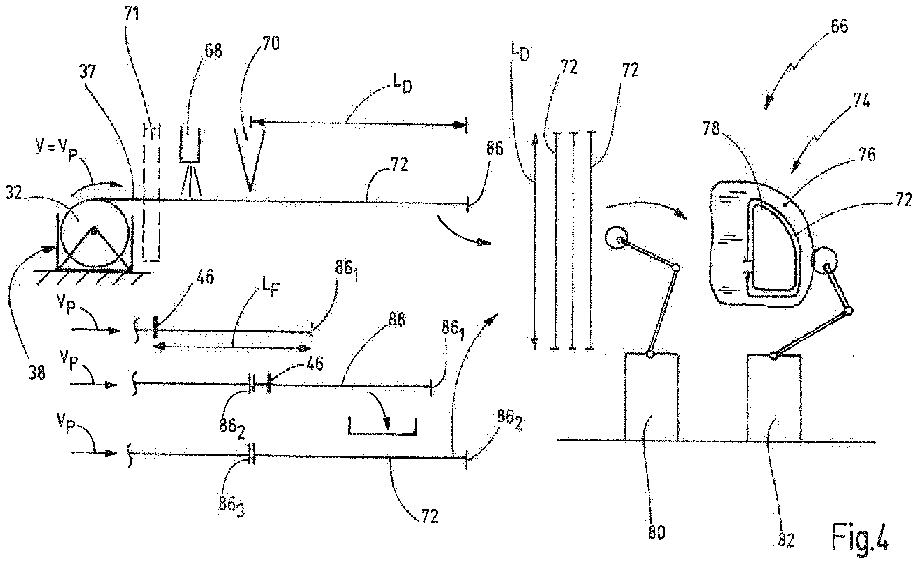

In Fig. 4, an apparatus for applying a material strand strip to a vehicle part is schematically shown and is given reference 66. The production apparatus 66 includes an inspection device 68. The inspection device 68 is designed to inspect the faultless material strand 37 that is un-stored from the material strand assembly 38, at a production speed V_{P}. The inspection device 68 is preferably a camera-based inspection device that is able to clearly identify joints, wherein the joints may have been produced by a mirror weld joining step, either with or without material between cutting end faces. The inspection device may, however, also be another type of inspection device, e.g. a metal detection device. Downstream of the inspection device 68, the production apparatus 66 includes a separation device 70 which is adapted to separate or cut the material strand.

Between the material strand assembly 38 and the inspection device 68, optionally, a production accumulator 71 can be provided which has a function similar to that of the first strand accumulator 22 of the manufacturing apparatus 10 of Fig. 1.

The separation device 70 is adapted to cut off strand strips 72 from the endless and faultless material strand 37, which strand strips 72 have an axial length L_{D} which is a predefined strip length adapted to the application purpose.

The production apparatus 66, further, includes an applying device 74. The applying device 74 is designed to apply a strand strip 72 to a vehicle part, in particular to a body opening of a vehicle body. As shown schematically in Fig. 4, the applying device 74 may be adapted to apply a strand strip 72 to a window opening 78 of a vehicle door 76.

The applying device 74 is preferably adapted to apply the strand strip 72 automatically, using at least one robot. In Fig. 1, two robots are shown at 80, 82. A first robot 80 may be used to handle the strand strips 72. A second robot 82 may be adapted to handle and three-dimensionally move the vehicle part (vehicle door 76).

In general, it is possible to provide an applying device 74, wherein the strand strip 72 is applied to the vehicle part while the strand strip 72 is still attached to the faultless material strand 37 (up until to the last portion). In Fig. 4, however, it is shown that strand strips 72 are cut off in advance before being applied to the vehicle part.

Fig. 4 also shows that the faultless material strand 37, when un-stored from the storage unit 32, has a downstream end 86. When the downstream end 86 has reached the distance L_{D} from the separation device 70, the separation device 70 is operated, so as to cut off the strand strip 72, and producing a new downstream end of the material strand 37.

In Fig. 4, left hand side, a situation is shown where a joint 46 is located at a distance L_{F} from a downstream end 86₁, which distance L_{F} is shorter than the predefined strip length L_{D}.

Therefore, in a second step, the joint 46 is moved passed the separation device 70, and the separation device 70 is operated, so that a second downstream end 86₂ is produced. The strand portion 88 between the first downstream end 86₁ and the second downstream end 86₂, including the joint 46, is discarded as waste.

Finally, it is shown that the second downstream end 86 has then again moved at the production speed V_{P} to a location, where it is located at the distance L_{D} from the cutting device 70 and wherein no joint is arranged within this distance, so that the separation device 70 can again be operated, so that another strand strip 72 can be cut off and used for applying it to the vehicle part, creating a third downstream end 86₃.

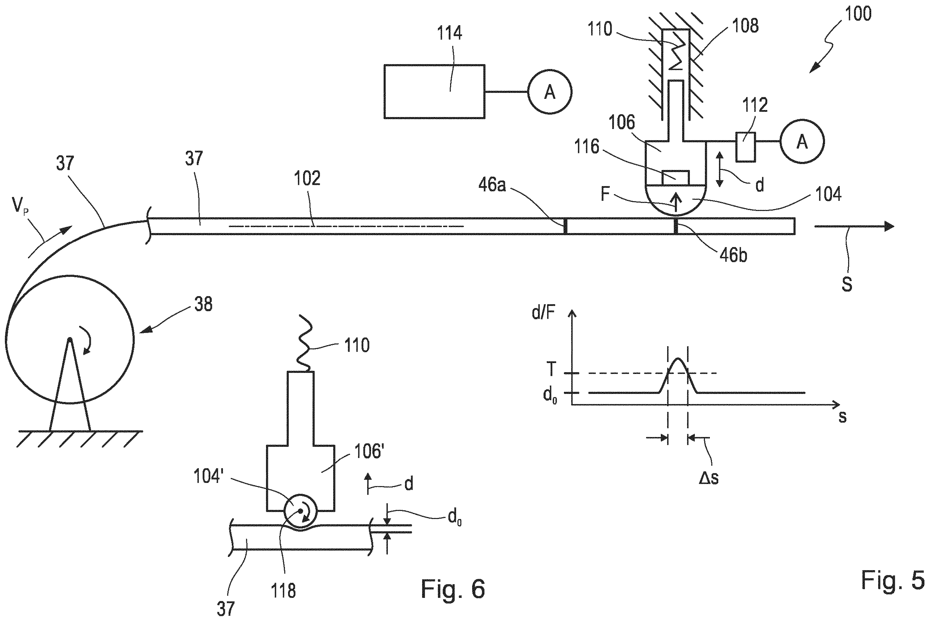

Fig. 5 shows a situation similar to Fig. 4, wherein a material strand 37 is un-stored from a material strip assembly 38 at a certain speed V_{P}. In order to identify or detect joints, the production apparatus 66 of Fig. 4 may, in addition to the inspection device 68 shown in Fig. 4 or as an alternative thereto, include an apparatus 100 for detecting irregularities.

The apparatus 100 is preferably a stationary apparatus. The material strand 37 is conveyed along a longitudinal axis 102. The movement of the material strand 37 is also shown in Fig. 5 at s.

The apparatus 100 includes a detection element 104 that is brought into contact with a surface of the material strand 37. Particularly, the detection element 104 is arranged at a bearing block 106. Here, the bearing block 106 is mounted movably in a deflection direction d on a housing 108. Further, the bearing block 106 is biased in a direction toward the material strand 37 by means of a spring 110.

The detection element 105 may be a low-friction surface element so that only little heat is produced during the relative movement between the detection element 104 and the material strand 37.

A deflection d of the bearing block 106 can be detected by means of a deflection sensor 112 which is typically an electro-mechanical travel sensor which is connected (via A) to a controller 114.

As an alternative and/or in addition to the deflection sensor 112, a force sensor 116 can be provided. In this case, the bearing block 106 does not need to be movable in a direction transverse to the longitudinal axis 102. In contrast, the bearing block 106 and the force sensor 116 may be stationary.

In any case, during the movement of the material strand 37, the deflection sensor 112 and/or the force sensor 116 will produce a sensor signal which essentially corresponds to a basic force by means of which the detection element 104 is pressed against the material strand 37.

Fig. 5 also shows a diagram of the deflection d and/or of the force F over the travel s.

Normally, if no irregularities are detected, the signal of the sensor(s) is at a basic value d₀. In case of detecting an irregularity, the deflection and/or force increases. If the deflection d and/or force F exceeds a certain threshold value T and if the axial length Δs of the peak is within a typical range of the axial joint length, an irregularity in the form of a joint in the faultless material strand is detected. The axial length Δs of the peak is preferably in a range of 0.5 to 80.0 mm, particularly 0.5 to 8.0 mm. A typical axial joint length is in a range of 0.1 to 1.0 mm. The threshold may be set on the basis of the basic value d₀. For example T = d₀ + 0.1 x d₀, i.e. 10% above the basic value d₀.

The sensor signals can be detected and recorded. Preferably, the sensor signals are output continuously and compared with a previously stored characteristic which reflects the shape of a peak when a joint is detected.

Joints 46a, 46b are for example shown in Fig. 5 as well in the material strand 37.

Fig. 6 shows an alternative embodiment, wherein the detection element is a roller element 104' which is mounted rotatably on a bearing block 106' about a roller axis 118 which is aligned transversely to both the longitudinal axis 102 and the deflection direction d.

In Fig. 6, it is further shown that the roller element 104', by means of a spring 110, is slightly pressed into the elastically deformable material strand 37 by a deflection amount D₀, which corresponds essentially to the basic value d₀ in the diagram of Fig. 5.

## Claims

1. A method for detecting joints in a sealing profile strand made of an elastomeric material, comprising the steps of:
- providing a sealing profile strand which defines a longitudinal axis along which the sealing profile strand is to be conveyed;
- bringing a detection element in contact with the sealing profile strand, wherein the detection element is movably mounted in a direction of deflection transverse to the longitudinal axis and/or wherein a force can act on the detection element in a force direction,
- setting up a relative movement between the detection element and the sealing profile strand along the longitudinal axis; and
- using a travel sensor for detecting a deflection of the detection element in the deflection direction and/or a force sensor for detecting a force acting on the detection element in the force direction, so as to detect a joint in the sealing profile strand, .when a sensor signal produced by the travel sensor and/or the force sensor exhibits a peak.

2. The method according to claim 1, wherein the detection element is mounted on a bearing block, wherein a deflection of the bearing block in the deflection direction and/or a force exerted on the bearing block by the sealing profile strand is detected in order to detect joints in the sealing profile strand.

3. The method according to claim 1 or 2, wherein the detection element is roller element which is mounted on a bearing block, wherein the roller element is rotatable about a roller axis which is aligned transversely to both the longitudinal axis and the deflection/force direction.

4. The method according to any of claims 1 to 3, wherein the deflection and/or the force is continuously detected and compared with a previously stored characteristic.

5. The method according to claim 4, wherein the deflection and/or the force are stored in the form of a displacement profile and/or a force profile.

6. The method of claim 1, wherein a peak is detected using a threshold value, wherein a joint is recognized if the sensor signal exceeds the threshold value.

7. The method of claim 6, wherein the threshold value is a basic value plus 10 %, wherein the basic value of the sensor signal is the value of the sensor signal when no joint is detected.

8. The method of claim 1, wherein a joint is detected if the axial length of the peak is in a range of 0.5 mm to 80 mm.

9. A method for applying a sealing profile strand strip on a body portion, comprising the steps of:
- providing a sealing profile strand assembly including a sealing profile strand which might have one or more joints,
- un-storing the sealing profile strand from the sealing profile strand assembly, wherein a detection element is brought into contact with the sealing profile strand, wherein the detection element is movably mounted in a deflection direction transverse to a longitudinal axis and/or wherein a force acting on the detection element in the deflection direction can be detected,
- detecting a joint in the sealing profile strand according to a method of any of claims 1 to 8, and
- cut off a sealing profile strand strip which has a predefined length, from an end of the sealing profile strand, if no joint has been detected between the end of the sealing profile strand and a cutting location determined by the predefined length.

10. An apparatus for detecting joints in a sealing profile strand made of an elastomeric material, comprising a detection element, a travel sensor and/or a force sensor and a control device, the apparatus being adapted to:
- providing a sealing profile strand which defines a longitudinal axis along which the sealing profile strand is to be conveyed;
- bringing the detection element in contact with the sealing profile strand, wherein the detection element is movably mounted in a direction of deflection transverse to the longitudinal axis and/or wherein a force can act on the detection element in a force direction,
- setting up a relative movement between the detection element and the sealing profile strand along the longitudinal axis; and
- using the travel sensor for detecting a deflection of the detection element in the deflection direction and/or the force sensor for detecting force acting on the detection element in the force direction, so as to detect a joint in the sealing profile strand, .when a sensor signal produced by the travel sensor and/or the force sensor exhibits a peak.

## Patentansprüche

1. Verfahren zum Erfassen von Fügeverbindungen in einem Dichtungsprofilstrang, der aus einem Elastomermaterial hergestellt ist, aufweisend die Schritte:
- Bereitstellen eines Dichtungsprofilstrangs, der eine Längsachse definiert, entlang der der Dichtungsprofilstrang zu fördern ist;
- Bringen eines Erfassungselements in Kontakt mit dem Dichtungsprofilstrang, wobei das Erfassungselement in einer Ablenkungsrichtung beweglich montiert ist, die quer verläuft zu der Längsachse, und/oder wobei eine Kraft auf das Erfassungselement in einer Kraftrichtung wirken kann,
- Einrichten einer Relativbewegung zwischen dem Erfassungselement und dem Dichtungsprofilstrang entlang der Längsachse; und
- Verwenden eines Wegsensors zum Erfassen einer Ablenkung des Erfassungselements in der Ablenkungsrichtung und/oder eines Kraftsensors zum Erfassen einer Kraft, die auf das Erfassungselement in der Kraftrichtung wirkt, um eine Fügeverbindung in dem Dichtungsprofilstrang zu erfassen, wenn ein von dem Wegsensor und/oder dem Kraftsensor erzeugtes Sensorsignal einen Spitzenwert zeigt.

2. Verfahren nach Anspruch 1, wobei das Erfassungselement an einem Lagerblock montiert ist, wobei eine Ablenkung des Lagerblocks in der Ablenkungsrichtung und/oder eine Kraft, die von dem Dichtungsprofilstrang auf den Lagerblock ausgeübt wird, erfasst wird, um Fügeverbindungen in dem Dichtungsprofilstrang zu erfassen.

3. Verfahren nach Anspruch 1 oder 2, wobei das Erfassungselement ein Rollenelement ist, das an dem Lagerblock montiert ist, wobei das Rollenelement um eine Rollenachse drehbar ist, die quer zu sowohl der Längsachse als auch der Ablenkungs-/Kraftrichtung ausgerichtet ist.

4. Verfahren nach einem beliebigen der Ansprüche 1 bis 3, wobei die Ablenkung und/oder die Kraft kontinuierlich erfasst wird bzw. werden und mit einer vorab gespeicherten Charakteristik verglichen wird bzw. werden.

5. Verfahren nach Anspruch 4, wobei die Ablenkung und/oder die Kraft in der Form eines Ablenkungsprofils und/oder eines Kraftprofils gespeichert wird bzw. werden.

6. Verfahren nach Anspruch 1, wobei ein Spitzenwert unter Verwendung eines Schwellenwertes erfasst wird, wobei eine Fügeverbindung erkannt wird, wenn das Sensorsignal den Schwellenwert überschreitet.

7. Verfahren nach Anspruch 6, wobei der Schwellenwert ein Basiswert zuzüglich 10 % ist, wobei der Basiswert des Sensorsignals jener Wert des Sensorsignals ist, wenn keine Fügeverbindung erfasst wird.

8. Verfahren nach Anspruch 1, wobei eine Fügeverbindung erfasst wird, wenn die axiale Länge des Spitzenwertes in einem Bereich von 0,5 mm bis 80 mm liegt.

9. Verfahren zum Anbringen eines Dichtungsprofilstrangstreifens an einem Karosserieabschnitt, mit den Schritten:
- Bereitstellen einer Dichtungsprofilstranganordnung, die einen Dichtungsprofilstrang beinhaltet, der eine oder mehrere Fügeverbindungen aufweisen kann,
- Entnehmen des Dichtungsprofilstrangs aus der Dichtungsprofilstranganordnung, wobei ein Erfassungselement in Kontakt mit dem Dichtungsprofilstrang gebracht wird, wobei das Erfassungselement in einer Ablenkungsrichtung, die quer zu einer Längsachse ausgerichtet ist, beweglich montiert ist, und/oder wobei eine Kraft, die auf das Erfassungselement in der Ablenkungsrichtung wirkt, erfasst werden kann,
- Erfassen einer Fügeverbindung in dem Dichtungsprofilstrang gemäß einem Verfahren nach einem beliebigen der Ansprüche 1 bis 8, und
- Abtrennen eines Dichtungsprofilstrangstreifens, der eine vorbestimmte Länge hat, von einem Ende des Dichtungsprofilstrangs, wenn keine Fügeverbindung zwischen dem Ende des Dichtungsprofilstrangs und einem Trennort erfasst worden ist, der durch die vorbestimmte Länge bestimmt ist.

10. Vorrichtung zum Erfassen von Fügeverbindungen in einem Dichtungsprofilstrang, der aus einem Elastomermaterial hergestellt ist, mit einem Erfassungselement, einem Wegsensor und/oder einem Kraftsensor und einer Steuereinrichtung, wobei die Vorrichtung ausgelegt ist zum:
- Bereitstellen eines Dichtungsprofilstrangs, der eine Längsachse definiert, entlang der der Dichtungsprofilstrang zu fördern ist;
- Bringen eines Erfassungselements in Kontakt mit dem Dichtungsprofilstrang, wobei das Erfassungselement in einer Ablenkungsrichtung beweglich montiert ist, die quer verläuft zu der Längsachse, und/oder wobei eine Kraft auf das Erfassungselement in einer Kraftrichtung wirken kann,
- Einrichten einer Relativbewegung zwischen dem Erfassungselement und dem Dichtungsprofilstrang entlang der Längsachse; und
- Verwenden eines Wegsensors zum Erfassen einer Ablenkung des Erfassungselements in der Ablenkungsrichtung und/oder eines Kraftsensors zum Erfassen einer Kraft, die auf das Erfassungselement in der Kraftrichtung wirkt, um eine Fügeverbindung in dem Dichtungsprofilstrang zu erfassen, wenn ein von dem Wegsensor und/oder dem Kraftsensor erzeugtes Sensorsignal einen Spitzenwert zeigt.

## Revendications

1. Procédé destiné à détecter des joints dans un cordon de profilé d'étanchéité constitué d'un matériau élastomère, comprenant les étapes suivantes :
- obtention d'un cordon de profilé d'étanchéité qui définit un axe longitudinal le long duquel le cordon de profilé d'étanchéité doit être transporté ;
- mise d'un élément de détection en contact avec le cordon de profilé d'étanchéité, l'élément de détection étant monté de façon mobile dans une direction de déviation transversale à l'axe longitudinal et/ou une force pouvant agir sur l'élément de détection dans une direction de force ;
- établissement d'un mouvement relatif entre l'élément de détection et le cordon de profilé d'étanchéité le long de l'axe longitudinal ; et
- utilisation d'un capteur de déplacement pour détecter une déviation de l'élément de détection dans la direction de déviation et/ou d'un capteur de force pour détecter une force agissant sur l'élément de détection dans la direction de force, de manière à détecter un joint dans le cordon de profilé d'étanchéité, quand un signal de capteur produit par le capteur de déplacement et/ou le capteur de force présente un pic.

2. Procédé selon la revendication 1, dans lequel l'élément de détection est monté sur un bloc d'appui, dans lequel une déviation du bloc d'appui dans la direction de déviation et/ou une force exercée sur le bloc d'appui par le cordon de profilé d'étanchéité sont détectées afin de détecter des joints dans le cordon de profilé d'étanchéité.

3. Procédé selon la revendication 1 ou 2, dans lequel l'élément de détection est un élément en forme de rouleau qui est monté sur un bloc d'appui, l'élément en forme de rouleau étant rotatif autour d'un axe de rouleau qui est aligné transversalement à la fois à l'axe longitudinal et la direction de déviation/force.

4. Procédé selon l'une quelconque des revendications 1 à 3, dans lequel la déviation et/ou la force sont détectées de façon continue et comparées à une caractéristique stockée antérieurement.

5. Procédé selon la revendication 4, dans lequel la déviation et/ou la force sont stockées sous la forme d'un profil de déplacement et/ou d'un profil de force.

6. Procédé de la revendication 1, dans lequel un pic est détecté au moyen d'une valeur seuil, un joint étant reconnu si le signal de capteur dépasse la valeur seuil.

7. Procédé de la revendication 6, dans lequel la valeur seuil est une valeur de base plus 10 %, la valeur de base du signal de capteur étant la valeur du signal de capteur quand aucun joint n'est détecté.

8. Procédé de la revendication 1, dans lequel un joint est détecté si la longueur axiale du pic se situe dans une gamme de 0,5 mm à 80 mm.

9. Procédé destiné à appliquer une bande de cordon de profilé d'étanchéité sur une partie de corps, comprenant les étapes suivantes :
- obtention d'un ensemble cordon de profilé d'étanchéité comportant un cordon de profilé d'étanchéité qui pourrait avoir un ou plusieurs joints,
- déstockage du cordon de profilé d'étanchéité de l'ensemble cordon de profilé d'étanchéité, un élément de détection étant mis en contact avec le cordon de profilé d'étanchéité, l'élément de détection étant monté de façon mobile dans une direction de déviation transversale à un axe longitudinal et/ou une force agissant sur l'élément de détection dans la direction de déviation pouvant être détectée,
- détection d'un joint dans le cordon de profilé d'étanchéité selon un procédé de l'une quelconque des revendications 1 à 8, et
- découpe d'une bande de cordon de profilé d'étanchéité qui a une longueur prédéfinie, depuis une extrémité du cordon de profilé d'étanchéité, si aucun joint n'a été détecté entre l'extrémité du cordon de profilé d'étanchéité et un emplacement de découpe déterminé par la longueur prédéfinie.

10. Appareil destiné à détecter des joints dans un cordon de profilé d'étanchéité constitué d'un matériau élastomère, comprenant un élément de détection, un capteur de déplacement et/ou un capteur de force et un dispositif de commande, l'appareil étant adapté pour :
- -obtenir un cordon de profilé d'étanchéité qui définit un axe longitudinal le long duquel le cordon de profilé d'étanchéité doit être transporté ;
- mettre l'élément de détection en contact avec le cordon de profilé d'étanchéité, l'élément de détection étant monté de façon mobile dans une direction de déviation transversale à l'axe longitudinal et/ou une force pouvant agir sur l'élément de détection dans une direction de force ;
- établir un mouvement relatif entre l'élément de détection et le cordon de profilé d'étanchéité le long de l'axe longitudinal ; et
- utiliser le capteur de déplacement pour détecter une déviation de l'élément de détection dans la direction de déviation et/ou le capteur de force pour détecter une force agissant sur l'élément de détection dans la direction de force, de manière à détecter un joint dans le cordon de profilé d'étanchéité, quand un signal de capteur produit par le capteur de déplacement et/ou le capteur de force présente un pic.
